(19) Europäisches Patentamt
European Patent Office
Office européen des brevets

(11) **EP 3 487 614 B1**

(12) **EUROPÄISCHE PATENTSCHRIFT**

(45) Veröffentlichungstag und Bekanntmachung des Hinweises auf die Patenterteilung:
**28.08.2019   Patentblatt 2019/35**

(21) Anmeldenummer: **16805037.5**

(22) Anmeldetag: **23.11.2016**

(51) Int Cl.:
*B01J 12/00* [(2006.01)]    *B01J 19/02* [(2006.01)]
*C01B 33/107* [(2006.01)]

(86) Internationale Anmeldenummer:
**PCT/EP2016/078600**

(87) Internationale Veröffentlichungsnummer:
**WO 2018/095525 (31.05.2018 Gazette 2018/22)**

(54) **VERFAHREN ZUR HYDRIERUNG VON SILICIUMTETRACHLORID**

PROCESS FOR HYDROGENATING SILICON TETRACHLORIDE

PROCÉDÉ D'HYDROGÉNATION DE TÉTRACHLORURE DE SILICIUM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.05.2019   Patentblatt 2019/22**

(73) Patentinhaber: **Wacker Chemie AG**
**81737 München (DE)**

(72) Erfinder:
• **ZETTL, Martin**
**84489 Burghausen (DE)**
• **HIRSCHMANN, Andreas**
**94140 Ering (DE)**
• **PÄTZOLD, Uwe**
**84489 Burghausen (DE)**
• **RING, Robert**
**84533 Haiming (DE)**

(74) Vertreter: **Belz, Ferdinand et al**
**Wacker Chemie AG**
**Hanns-Seidel-Platz 4**
**81737 München (DE)**

(56) Entgegenhaltungen:
EP-A1- 2 746 222        WO-A1-2013/116146
DE-A1-102012 218 741    US-A1- 2004 047 793

**Beschreibung**

Die Erfindung betrifft ein Verfahren zur Hydrierung von Siliciumtetrachlorid (STC).

STC fällt insbesondere bei der Abscheidung von polykristallinem Silicium an. Polykristallines Silicium wird beispielsweise mittels des Siemens-Prozesses erzeugt. Dabei wird Silicium in einem Reaktor an erhitzten Dünnstäben abgeschieden. Als Prozessgas wird als Silicium enthaltende Komponente ein Halogensilan wie Trichlorsilan (TCS) in Anwesenheit von Wasserstoff verwendet. Dabei entstehen in der Regel große Mengen an STC als Nebenprodukt.

Die Herstellung von TCS erfolgt üblicherweise in einem Wirbelbettverfahren aus metallurgischem Silicium und Chlorwasserstoff. Um hochreines Trichlorsilan zu erzeugen, erfolgt anschließend in der Regel eine Destillation. Dabei fällt als Nebenprodukt auch STC an.

Die wirtschaftlich interessanteste Verwertung von STC ist üblicherweise die Konvertierung zu TCS. Diese erfolgt durch Hydrierung von STC mit Wasserstoff zu TCS und Chlorwasserstoff. Dadurch ist es möglich, das anfallende STC in einem Kreislaufprozess zu recyceln und das erhaltene TCS beispielsweise dem Herstellungsprozess von polykristallinem Silicium zuzuführen.

Die Konvertierung von STC mit Wasserstoff zu TCS findet üblicherweise bei hohen Temperaturen von wenigstens 600°C, insbesondere wenigstens 850°C (Hochtemperaturkonvertierung) statt. Für das Erhitzen der gasförmigen Edukte auf die Reaktionstemperatur und die Zufuhr der endothermen Reaktionsenergie sind Heizelemente erforderlich. Das Erhitzen der Edukte kann prinzipiell durch verschiedene Methoden erfolgen, beispielsweise mittels Induktionsheizelementen oder mittels elektrischer Widerstandsheizelementen. Bei der Hochtemperaturkonvertierung sind insbesondere Widerstandsheizelemente praktikabel und daher weit verbreitet.

Für eine möglichst effiziente Energienutzung werden die gasförmigen Edukte der Reaktion (STC und Wasserstoff) üblicherweise mit Hilfe heißer Abgase aus dem Reaktor, wobei es sich im Wesentlichen um TCS, Chlorwasserstoff, STC und Wasserstoff handelt, mittels Wärmetauschern erwärmt.

Reaktoren für die Hydrierung von STC mit Wasserstoff müssen generell den hohen Temperaturen und der korrosiven Natur von Chlorsilanen und Chlorwasserstoff, die während der Hydrierung gebildet werden, widerstehen können. Daher werden typischerweise Materialien auf Kohlenstoffbasis, einschließlich Kohlenstoff, Graphit, Kohlenstofffaser-Verbundmaterialien und dergleichen, als Konstruktionswerkstoffe innerhalb des Reaktors eingesetzt.

Bei hohen Temperaturen reagieren Bauteile auf Kohlenstoffbasis mit Wasserstoff zu Methan (Methanisierung). Dies kann zu strukturellen Defekten des Reaktors und schließlich zu Reaktorausfällen führen. Die Standzeit des Reaktors kann sich auf diese Weise verringern. Der Austausch defekter Teile gegen neue Teile ist in der Regel mit einem erheblichen finanziellen Aufwand verbunden.

Die Methanisierung kann insbesondere an den Heizelementen auftreten, die direkt mit Wasserstoff und STC in Berührung kommen. Die Heizelemente bestehen in der Regel aus Graphit oder umfassen zumindest eine Graphitoberfläche. Daneben können auch Wärmetauscher auf Kohlenstoffbasis im Bereich höherer Temperaturen durch die Reaktion von im Abgas enthaltenem Wasserstoff zu Methan geschädigt werden. Hierdurch kann es zu einem Materialabtrag und somit zu strukturellen Defekten an den Bauteilen kommen. Besonders aus Graphit gefertigte Heizelemente zeigen die größte Korrosionsanfälligkeit, da hier Wasserstoff in Kontakt mit den heißen Oberflächen der Heizelemente treten kann. Beschädigungen der Heizelemente führen in der Regel zu einem Ausfall des Reaktors, da der Stromfluss für den erforderlichen Leistungseintrag meist unterbrochen wird.

Gemäß DE 195 02 550 B4 wird vorgeschlagen, die Heizelemente für einen Reaktor durch eine Trennwand vom wasserstoffhaltigen Reaktionsgas zu trennen. Dadurch kommen die Heizelemente nicht in Kontakt mit erhitztem Wasserstoff. Die Methanisierungsreaktion an den Heizelementen kann damit verhindert werden. Der korrosive Angriff von Wasserstoffgas auf andere Oberflächen auf Kohlenstoffbasis kann allerdings nicht verhindert werden.

EP 2 000 434 A2 offenbart eine Vorrichtung zur Konvertierung von STC, bei der die Heizelemente getrennt vom Reaktionsraum angeordnet sind. Ein Raum zwischen Reaktionsraum und äußerem Reaktorbehälter wird mit Argon unter erhöhtem Druck versorgt, um Leckagen nach außen zu verhindern. Hier stehen die Heizelemente nicht in Kontakt mit Wasserstoff, so dass eine Korrosion vermieden werden kann. Allerdings treten die eingesetzten Wärmetauscher in Kontakt mit Wasserstoff.

Ein wesentlicher Nachteil der bekannten Methoden besteht darin, dass durch die höhere Entfernung der Heizelemente zum Reaktionsraum eine wesentlich höhere Temperatur der Heizelemente benötigt wird, um die erforderliche Leistung einzutragen. Dadurch ist grundsätzlich ein größerer Aufwand im Hinblick auf die Isolierung des Heizraums, in welchem die Heizelemente angeordnet sind erforderlich. In der Regel verstärkt die zusätzliche Isolierung zudem den Durchmesser der Anlage. Ferner ist der Heizraum üblicherweise mit einer aufwändigen Druckregulierung zu versehen, die dafür sorgt, dass der Druck im Heizraum größer ist als der Druck im Reaktionsraum. Dadurch soll verhindert werden, dass Wasserstoff nicht in den Heizraum eindringt. Ein weiterer Nachteil der bekannten Methoden kann darin bestehen, dass nur die Heizelemente, nicht jedoch die Wärmetauscher, vor Korrosion geschützt werden.

Kommt es zu einer Beschädigung der den Heizraum begrenzenden Hülle, beispielsweise durch Korrosion oder durch Risse aufgrund von thermischer Belastung, kann das Inertgas aus dem Heizraum aufgrund des Überdrucks in den Reaktionsraum strömen. Dies führt in der Regel zu einer Kontamination des Reaktionsraums und kann sich nachteilig auf die Produktqualität auswirken. Grundsätzlich erfordert die Trennung von Reaktionsraum und Heizraum konstruktionstechnisch einen hohen Aufwand und bedingt höhere Produktions- und Wartungskosten.

Gemäß EP 1 775 263 A1 wird vorgeschlagen, die Oberfläche eines Reaktionsraumes und die Oberfläche der Heizelemente vor der Hydrierung von STC *in situ* mit Siliciumcarbid (SiC) zu beschichten, um einer Methanisierung vorzubeugen. Die Beschichtung findet bei einer Temperatur von mindestens 1000°C statt.

Es hat sich allerdings gezeigt, dass mit SiC oder auch Siliciumnitrid (SiN) beschichtete Materialien nicht vollständig vor Korrosion durch Wasserstoff und/oder Chlorwasserstoff geschützt sind. Temperaturwechsel, insbesondere bei der Inbetriebnahme oder auch während des Prozesses, können auch bei nur minimal unterschiedlichen Wärmeausdehnungskoeffizienten der Beschichtung im Vergleich zum Grundwerkstoff der Heizelemente zu Rissen in der Beschichtung führen. An diesen Stellen ist der Grundwerkstoff ungeschützt gegen Korrosion. Eine solche Beschichtung, insbesondere auch von Wärmetauschern, ist zudem meist mit einem erheblichen finanziellen Aufwand verbunden.

Gemäß WO 2015/140027 A1 wird offenbart, dass eine Einspeisung kohlenstoffhaltiger Verbindungen mit den Edukten STC und Wasserstoff den chemischen Angriff insbesondere auf SiC oder SiC-haltige Materialien verringert. Dadurch kann die Lebensdauer von SiC-Bauteilen verlängert werden. Die erhöhten Konzentrationen flüchtiger Kohlenstoffverbindungen können sich nachteilig auswirken, da dadurch die Bildung von Organochlorsilanen beschleunigt wird und diese aufwändig vom Produkt abgetrennt werden müssen.

Gemäß DE 10 2012 218 741 A1 wird ein Verfahren zur Konvertierung von STC zu TCS offenbart, in dem durch eine Einspeisung von Borverbindungen die Schädigung von mit SiC beschichteten Heizelementen deutlich vermindert werden kann. Dies wird anhand des zeitlichen Verlaufs des elektrischen Widerstands der Heizelemente nachgewiesen. Der über längere Zeit stabile Widerstand der Heizelemente zeigt an, dass keine weitere Schädigung auftritt. Der genaue Mechanismus dieses Effekts ist nicht bekannt. Nachteilig könnte sich eine Verteilung der Borverbindung im System auswirken, die zu einem erhöhten Aufwand bei der Reinigung des Produktes führen kann.

Aus WO 2013/116146 A1 ist ein Verfahren zum Auftragen von SiC-und SiN-Schichten oder Mischphasen hieraus auf Graphitbauteile beschrieben, ohne diese aus dem Reaktor zu entfernen. Hierzu werden vor Prozessbeginn Polycarbosilane oder Polysilazane oder eine Mischung hieraus auf die Bauteile aufgebracht und in einem vorgelagerten Schritt eine Härtung durchgeführt, bei der sich die keramischen Schichten zur Passivierung und Reparatur der Bauteile bilden.

Aus dem Verfahren ergeben sich einige Nachteile, unter anderem sind die mittels Härtung gebildeten Schichten nicht völlig gasdicht. Es kann weiterhin eine Schädigung durch chemischen Angriff mit Wasserstoff oder Chlorwasserstoff auftreten. Um völlige Gasdichtheit zu gewährleisten, ist ein mehrfaches Auftragen der SiC-und/oder SiN-Schichten erforderlich. Die Anlagenverfügbarkeit wird dadurch reduziert.

In Reaktoren zur Konvertierung von STC in TCS wird bevorzugt Graphit als Material für Wärmetauscher, Heizelemente und zur Strömungsführung eingesetzt. Graphit eignet sich besonders wegen seiner Temperaturstabilität, Wärmeleitfähigkeit, elektrischen Leitfähigkeit und Verarbeitungseigenschaften. Jedoch kann es bei höheren Temperaturen und Anwesenheit von Wasserstoff zur ungewollten Methanisierungsreaktion kommen. Die Geschwindigkeit dieser Reaktion steigt mit der Temperatur an.

Um der Methanisierungsreaktion vorzubeugen, wird versucht die verwendeten Graphitteile mit geeigneten Materialien zu beschichten oder Keramiken einzusetzen. Ferner gibt es Ansätze, für eine Methanisierungsreaktion anfällige Bauteile durch eine Überlagerung mit Inertgasen zu passivieren.

Die vorgeschlagenen Lösungen können das Problem allerdings nicht befriedigend lösen, da sie den technischen Aufwand erhöhen, zu ungewollten Energieverlusten führen, sowie die Verfügbarkeit der Anlagen und die spezifische Produktleistung (Raum-Zeit-Ausbeute) reduzieren.

Aus dieser Problematik ergab sich die der vorliegenden Erfindung zugrunde liegende Aufgabe, ein Verfahren zur Hydrierung von STC bereitzustellen, bei welchem eine Methanisierung nicht passivierter, heißer Oberflächen auf kostengünstige Art und Weise verhindert oder zumindest verlangsamt wird.

Die Aufgabe der Erfindung wird gelöst durch ein Verfahren zur Hydrierung von STC in einem Reaktor, bei dem ein Wasserstoff und STC enthaltendes Eduktgas mittels mindestens einem Heizelement, das eine Graphitoberfläche umfasst, auf eine Temperatur zwischen 850°C und 1600°C erwärmt wird, wobei die Temperatur des Heizelements zwischen 850°C und 1600°C beträgt.

Das Verfahren zeichnet sich dadurch aus, dass dem Eduktgas Stickstoff in einem Stoffmengenanteil von 0,1 bis 10 % bezogen auf Wasserstoff zugesetzt wird.

In einer bevorzugten Ausführungsform wird Stickstoff in einem Stoffmengenanteil von 0,5 bis 5 %, bevorzugt 1 bis 4 %, besonders bevorzugt 1,5 bis 3 %, bezogen auf Wasserstoff zugesetzt.

Vorzugsweise handelt es sich beim Stickstoff um gasförmigen (molekularen) Stickstoff ($N_2$).

Überraschend hat sich gezeigt, dass infolge der Zugabe von Stickstoff zu dem Eduktgas eine starke Passivierung von heißen Graphitoberflächen auftritt, die in Kontakt mit dem Eduktgas stehen. Es wird vermutet, dass eine kinetische Hemmung der Methanisierungsreaktion auftritt. Der zugrundeliegende Mechanismus ist noch nicht abschließend geklärt.

Es hat sich herausgestellt, dass sich insbesondere molekularer Stickstoff bei Temperaturen über 850°C gerade nicht wie im Stand der Technik, beispielsweise gemäß WO 2013/116146 A1 und DE 10 2010 039 267 A1, beschrieben inert verhält und lediglich als Komponente angesehen werden kann, welche die Raum-Zeit-Ausbeute im Prozess reduziert (Blindlast).

In bekannten Verfahren zur Hydrierung oder Konvertierung von STC zu TCS wird grundsätzlich ein Eintrag von Stickstoffverbindungen, beispielsweise durch Spülungen des Reaktors mit Stickstoff, vermieden, um die Blindlast zu verringern.

Grundsätzlich ist es für das erfindungsgemäße Verfahren notwendig, dass Stickstoff über die gesamte Verfahrensdauer vorhanden ist. Die Abwesenheit von Stickstoff führt generell zu einem Ausbleiben des positiven Effekts der Passivierung.

Es wurde festgestellt, dass Stickstoff in einem Stoffmengenanteil von 0,1 - 10 % bezogen auf Wasserstoff zu keiner signifikanten Reduktion der Ausbeute an TCS führt. Die auftretende Passivierung der heißen Graphitoberfläche des mindestens einen Heizelements verlängert dessen Lebensdauer, erhöht die Verfügbarkeit des Reaktors und vereinfacht den Reaktoraufbau. Der positive Effekt der Passivierung tritt umso mehr in Erscheinung, je höher die Verfahrenstemperatur bzw. die Temperatur der mit dem Eduktgas in Kontakt stehenden Graphitoberflächen ist.

Die Passivierung der heißen Graphitoberflächen nimmt mit steigender Temperatur zu. Dies kann durch eine Abnahme des Widerstands der Heizelemente bei gleichzeitig steigender Heizleistung und damit Temperatur beobachtet werden. Dies ist von besonderem Vorteil. Auf der einen Seite nimmt die Reaktionsgeschwindigkeit der Methanisierung mit der Temperatur überproportional zu und damit auch die Schädigung der Heizelemente. Auf der anderen Seite erhöht sich jedoch mit steigender Temperatur die Ausbeute an TCS, da sich das chemische Gleichgewicht hin zur Bildung von TCS verschiebt. Insgesamt lässt sich also bei einer gleichzeitigen Steigerung der Lebensdauer der Heizelemente die Ausbeute an TCS erhöhen. Für Wärmetauscher, die eine Graphitoberfläche aufweisen gilt entsprechendes.

Grundsätzlich ist es unerheblich, ob das Heizelement aus Graphit besteht oder nur eine Graphitoberfläche aufweist. Vorzugsweise handelt es sich um ein Heizelement aus Graphit.

Gemäß einer Ausführungsform des Verfahrens beträgt die Temperatur des mindestens einen Heizelements 850 bis 1500°C, bevorzugt 900 bis 1400°C, besonders bevorzugt 900 bis 1300°C.

Die Temperatur des Eduktgases kann 850 bis 1500°C, bevorzugt 900 bis 1400°C, besonders bevorzugt 900 bis 1300°C, betragen.

Vorzugsweise wird das Verfahren bei einem Druck zwischen 2 und 18 bar, bevorzugt 3 bis 17 bar, besonders bevorzugt 4 bis 16 bar, insbesondere 5 bis 15 bar, durchgeführt. Ein Verfahrensdruck von 2 bar bedeutet dabei, dass das Verfahren bei einem Druck von 2 bar über dem Standardatmosphärendruck (1,013 bar) durchgeführt wird.

In dem Eduktgas enthaltenes STC und Wasserstoff liegen vorzugsweise in einem Stoffmengenverhältnis von 1 : 1,3 bis 1 : 2,5, bevorzugt 1 : 1,5 bis 1 : 2,3, besonders bevorzugt 1 : 1,6 bis 1 : 2,2, vor.

Gemäß einer Ausführungsform des erfindungsgemäßen Verfahrens ist es bevorzugt, dass die Graphitoberfläche des mindestens einen Heizelements mit SiC beschichtet ist.

Gemäß einer weiteren Ausführungsform kann dem Eduktgas ferner eine Borverbindung zugesetzt werden. Die Borverbindung ist vorzugsweise ausgewählt aus der Gruppe mit Diboran, höhere Borane (z.B. $B_5H_9$, $B_5H_{11}$), Borhalogenverbindungen (z.B. $BCl_3$, $B_2Cl_4$), Borsilylverbindungen (z.B. $Cl_2B$-$SiCl_3$) und Mischungen daraus.

Es hat sich herausgestellt, dass die Zugabe einer Borverbindung neben der Zugabe von Stickstoff eine weitere Verbesserung des zeitlichen Verlaufs des Widerstands der Heizelemente bewirkt.

Vorzugsweise liegen dabei die Borverbindung und die Stickstoffverbindung in einem Stoffmengenverhältnis von 1:100 bis 1:10000, bevorzugt 1:1000 bis 1:5000 vor.

Bezogen auf die Menge an Eduktgas wird die Borverbindung bevorzugt in einem Stoffmengenanteil von 0,1 bis 100 ppmv (parts per million by volume), besonders bevorzugt 1 bis 50 ppmv, insbesondere 1 bis 20 ppmv, zugesetzt.

Gemäß einer bevorzugten Ausführungsform des erfindungsgemäßen Verfahrens ist dem zumindest einen Heizelement zumindest ein Wärmetauscher vorgeschaltet und/oder nachgeschaltet. Vorzugsweise weist der Wärmetauscher eine Graphitoberfläche auf. Bei dem Wärmetauscher kann sich beispielsweise um einen Gegenstromwärmetauscher und/oder Kreuzstromwärmetauscher handeln. In dem Wärmetauscher wird insbesondere Wärme eines TCS, Chlorwasserstoff und nicht umgesetzt Eduktgas enthaltenden Produktgases dem Eduktgas zugeführt.

Es ist bevorzugt, dass der Stickstoff und/oder die Borverbindung gemeinsam mit Wasserstoff dem Reaktor zugeführt wird. Insbesondere findet dabei eine Durchmischung der beiden Komponenten vor Eintritt in den Reaktionsraum statt.

Ferner ist es bevorzugt, dass der Stickstoff und/oder die Borverbindung gemeinsam mit STC dem Reaktor zugeführt wird. Auch dabei findet vorzugsweise eine Durchmischung der beiden Komponenten vor Eintritt in den Reaktionsraum statt.

Außerdem kann es bevorzugt sein, den Stickstoff und/oder die Borverbindung sowohl mit Wasserstoff als auch mit STC gemeinsam dem Reaktor zuzuführen.

Die Konzentration der Borverbindung im Wasserstoff oder STC beträgt vorzugsweise mindestens 0,1 ppmv.

Vorzugsweise enthält der verwendete Wasserstoff bereits den Stickstoff und/oder die Borverbindung. Die einzelnen Komponenten können dabei einem gemeinsamen Reservoir entnommen werden. Dadurch entfällt die Notwendigkeit einer getrennten Zuleitung und Dosierung.

Besonders bevorzugt handelt es sich um einen stickstoffhaltigen Wasserstoffstrom.

Da die Hydrierung von STC aufgrund kinetischer Effekte und chemischem Gleichgewicht keinen vollen Umsatz zeigt, ist es bevorzugt das Verfahren als Kreisprozess zu betreiben. Dabei kann das Produkt aus dem Produktgas abgetrennt und abgeführt werden. Die nicht reagierten Edukte STC und Wasserstoff können hierbei zurückgewonnen und als Eduktgas dem Reaktor erneut zugeführt werden.

Aus der Anwendung eines Kreisprozesses resultiert ferner der Vorteil, dass die zugesetzte Menge an Stickstoff nur wenig abnimmt im Verlauf des Verfahrens. Es müssen lediglich Verluste, beispielsweise hervorgerufen durch Ausschleusungen von Edukt- oder Produktströmen aus dem Prozess und in Flüssigkeitsspezies oder Feststoffen gebundener Stickstoffverbindung, ausgeglichen werden.

Fig. 1     zeigt eine Vorrichtung zur Durchführung des erfindungsgemäßen Verfahrens

Fig. 2     zeigt die Wirkung von $N_2$ auf den elektrischen Widerstand von Heizelementen während des erfindungsgemäßen Verfahrens

Fig. 3     zeigt die Wirkung einer Borverbindung auf den elektrischen Widerstand von Heizelementen während des erfindungsgemäßen Verfahrens

Fig. 4     zeigt die wirtschaftlichen Vorteile des erfindungsgemäßen Verfahrens

Fig. 5, 6     zeigen jeweils ein Massenspektrum einer Heizelementoberfläche

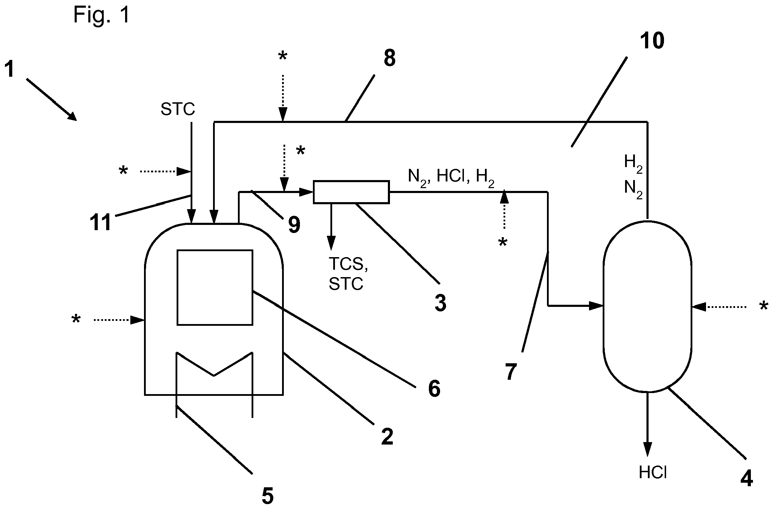

Das erfindungsgemäße Verfahren kann beispielsweise in einer Vorrichtung wie schematisch in Fig. 1 dargestellt durchgeführt werden.

Die Vorrichtung 1 umfasst einen Reaktor 2 zur Hydrierung von STC, eine Kondensationseinheit 3 zur Abtrennung von TCS und nicht umgesetztem STC sowie eine Trenneinheit 4 zur Trennung von Wasserstoff ($H_2$), Stickstoff ($N_2$) und Chlorwasserstoff (HCl). Der Reaktor 2 umfasst ein Widerstandsheizelement 5 und einen Wärmetauscher 6 sowie eine Zuleitung 11 für STC, eine Zuleitung 8 für $N_2$ und $H_2$ und eine Ableitung 9 für Produktgas. Sowohl das Widerstandsheizelement 5 als auch der Wärmetauscher 6 weisen eine Graphitoberfläche auf.

Der Reaktor 2 kann wie in US 4,536,642 A beschrieben aufgebaut sein.

Die durch eine Leitung 7 mit der Kondensationseinheit 3 verbundene Trenneinheit 4 bildet zusammen mit der Zuleitung 8 und der Ableitung 9 einen Kreisprozess 10 zur Aufarbeitung von aus dem Reaktor 2 entnommenen Produktgas. Das Produktgas umfasst neben TCS und HCl nicht umgesetztes $H_2$ und STC.

Die mit einem Stern (*) markierten Pfeile stellen mögliche Zuleitungen für die Stickstoffverbindung dar, bei welcher es sich beispielhaft um $N_2$ handelt.

Zur Durchführung des Verfahrens wird STC über die Zuleitung 11 und $H_2$ über die Zuleitung 8 dem Reaktor 2 zugeführt. Der $N_2$ kann grundsätzlich über jede der mit einem Stern (*) markierten Zuleitungen zugeführt werden. Im vorliegenden Beispiel handelt es sich jedoch um einen $N_2$-haltigen Wasserstoffstrom, der insbesondere an anderer Stelle in einem Verbund anfällt und im Kreisprozess 10 verwertet wird. Zusätzliche Prozesssicherheitseinrichtungen und Regeleinrichtungen, beispielsweise für eine exakte Dosierung, werden dadurch vermieden und die Kosten gesenkt. Eine weitere bevorzugte Art der Zuführung von $N_2$ stellt die Zuführung von in STC gelöstem $N_2$ dar. Die Löslichkeit von $N_2$ in STC wird durch das Henry-Gesetz bestimmt.

Sowohl der Wärmetauscher 6 als auch das Widerstandsheizelement 5 sind so angeordnet, dass sie in direktem Kontakt mit den zugeführten Gasen STC, $H_2$ und $N_2$ stehen. Die Graphitoberflächen des Widerstandsheizelements 5 haben eine Temperatur zwischen 850 und 1600°C, die des Wärmetauschers 6 eine Temperatur zwischen 850 und 1600°C. Der $N_2$ führt zu einer Passivierung der heißen Graphitoberflächen. Eine Methanisierung der Oberflächen wird dadurch vermindert und der Verschleiß von Wärmetauscher 6 und Widerstandsheizelement 5 verlangsamt.

Für die passivierende Wirkung ist es grundsätzlich unerheblich, auf welche Weise die Stickstoffverbindung, insbesondere der $N_2$, dem Prozess zugeführt wird.

Das Produktgas wird über die Ableitung 9 dem Kreisprozess 10 zugeführt. Zunächst wird in der Kondensationseinheit 3 das Produkt TCS von nicht umgesetztem STC aus dem Produktstrom weitestgehend abgetrennt, beispielsweise durch Kondensation. Das erhaltene STC kann dem Reaktor 2, beispielsweise über die Zuleitung 11, zugeführt werden. Das erhaltene TCS kann beispielsweise direkt zur Herstellung von Polysilicium herangezogen werden.

Das die Kondensationseinheit 3 über die Leitung 7 verlassende Gas wird der Trenneinheit 4 zugeführt. Hier erfolgt, beispielsweise durch ein oder mehrere Absorptions- und Desorptionsschritte, eine Abtrennung von HCl, wobei $H_2$ und $N_2$ dem Kreisprozess 10 wieder zugeführt werden. Ein Verfahren zur Abtrennung von HCl ist in DE 31 39 705 A1 offenbart.

Aus dem Kreisprozess 10 resultiert der Vorteil, dass die zugesetzte Menge an $N_2$ nur wenig abnimmt im Verlauf des Verfahrens. Es wurde festgestellt, dass we-

sentliche Verluste an $N_2$ während des Verfahrens ausschließlich durch Ausschleusungen entstehen.

Proben von Reaktoreinbauteilen auf Kohlenstoffbasis, welche mit unterschiedlichen Analyseverfahren (Infrarotspektroskopie IR (Abgeschwächte Totalreflexion (ATR) an Diamant), Rasterelektronenmikroskopie REM, Energiedispersive Röntgenspektroskopie EDX, Röntgendiffraktometrie XRD, Elementaranalyse) untersucht wurden, haben diesen Bilanzierungszusammenhang bestätigt. Analysen des Abgases während des erfindungsgemäßen Verfahrens haben keine Stickstoffspezies im Abgas des Reaktors gezeigt.

Jedoch führt die Untersuchung von auf Kohlenstoff basierenden Bauteiloberflächen zur Detektion vereinzelter Stickstoffspezies. Mittels der oben genannten infrarotspektroskopischen und röntgendiffraktometrischen Messmethoden konnte keine Stickstoffspezies nachgewiesen werden, da diese scheinbar unterhalb der entsprechenden Nachweisgrenzen vorliegen. Mittels einer Kombination aus REM-/EDX-Analyse konnte allerdings auf einigen wenigen untersuchten Arealen der Bauteiloberfläche die Existenz von Stickstoff nachgewiesen werden. Aufgrund der lokalen Begrenztheit dieser Analysemethode, lassen sich jedoch keine Rückschlüsse auf die gesamte Bauteiloberfläche ziehen. Mittels der Flugzeit-Sekundärionenmassenspektrometrie (ToF-SIMS) können ebenfalls verschiedene Stickstoffspezies im Spurenbereich nachgewiesen werden (vgl. Beispiel 3). Diese Stickstoffspezies sind allerdings nur am Bauteil und nicht im Produkt nachweisbar.

Insgesamt lässt der Nachweis von Stickstoff bzw. Stickstoffspezies auf der Bauteiloberfläche vermuten, dass der zugeführte $N_2$ durch Ausbildung oberflächenspezifischer Bindungen aktiv an der Hemmung der Methanisierungsreaktion beteiligt ist.

**Beispiele**

Die Beispiele wurden in einer Vorrichtung gemäß Fig. 1 durchgeführt. Es wurde ein Eduktgas enthaltend 33 mol-% STC und 67 mol-% H2 eingesetzt.

Dem $H_2$ wurde $N_2$ in einer Menge von 0,1 bis zu 5 mol-% zugesetzt und die Auswirkungen auf Graphitoberflächen (Hemmung der Methanisierungsreaktion) über einen längeren Zeitraum beobachtet.

**Beispiel 1**

Folgende Betriebsparameter wurden gewählt:

- Molverhältnis STC:$H_2$ = 1:1,9
- Reaktionstemperatur = 975°C
- Druck = 12 bar

Die Anordnung der Widerstandsheizelemente mit Graphitoberfläche war wie in DE 10 2011 077 967 A1 beschrieben. Die Temperatur der Heizelemente konnte entweder paarweise oder aber in definierten Gruppen geregelt bzw. angesteuert werden.

Aus dem elektrischen Strom (I) und der elektrischen Spannung (U) kann der elektrische Widerstand (R) gemäß der allgemeinen Formel $R = \frac{U}{I}$ für das jeweilige Heizelement berechnet werden. Der Widerstand diente als Indikator für die Schädigung der Heizelemente.

Wird in kurzer Zeit eine deutliche Erhöhung des Widerstands festgestellt, ist auch mit einer Schädigung des Heizelements zu rechnen. Diese Schädigungen führen zu einem vorzeitigen Ausfall der Heizelemente.

Dieses Verfahren zur Beobachtung der Schädigung von Heizelementen wurde in DE 10 2012 218 741 A1 bereits beschrieben.

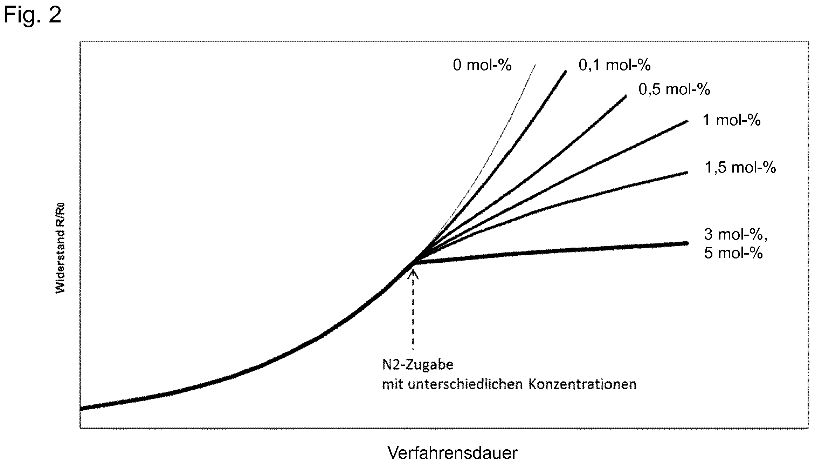

Fig. 2 zeigt den Verlauf des Widerstands eines Heizelements in Abhängigkeit von der Verfahrensdauer bei sieben verschiedenen $N_2$-Konzentration (0 mol-%, 0,1 mol-%, 0,5 mol-%, 1,0 mol-%, 1,5 mol-%, 3 mol-%, 5 mol-% jeweils bezogen auf $H_2$). Die Zugabe von $N_2$ erfolgte nach einer Verfahrensdauer von 200 Stunden.

Es ist deutlich zu erkennen, dass sich nach Zugabe von $N_2$ die Widerstandskurve abflacht. Mit anderen Worten nimmt der Widerstand des Heizelements nach der Zugabe von $N_2$ zum Eduktgas weniger stark zu als er dies bei Abwesenheit non $N_2$ täte. Der Anstieg des Widerstands verringert sich. Dieser Trend setzt sich bis zu einer $N_2$-Konzentration von 3 mol-% fort. Ab einer Konzentration > 3 mol-% konnte keine weitere Verringerung des Widerstandanstiegs mehr festgestellt werden.

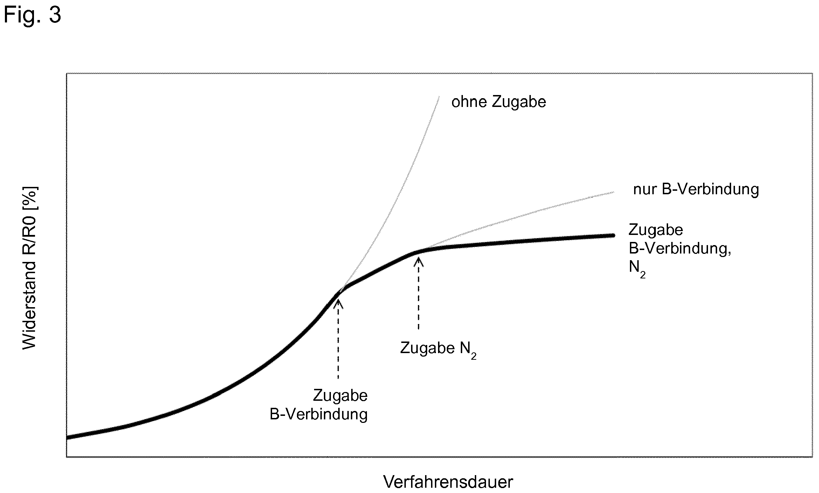

Fig. 3 zeigt den Verlauf des Widerstands eines Heizelements in Abhängigkeit von der Verfahrensdauer nach einer gemeinsamen Zugabe von Diboran und $N_2$. Diboran wurde nach einer Verfahrensdauer von 200 Stunden mit einer konstanten Konzentration von 4 ppmv bezogen auf den Gesamtvolumenstrom dem Eduktgas zugesetzt. Unmittelbar danach zeigte sich bereits eine Verringerung des Anstiegs des Widerstands. Nach einer Zeit von 300 Stunden wurde $N_2$ mit einer Konzentration von 1,5 mol-% bezogen auf $H_2$ zugesetzt. Es ist deutlich die weitere Reduzierung des Widerstandsanstiegs und damit der Reduzierung der Schädigung der Heizelemente zu erkennen. Der positive Effekt lässt sich somit auch durch die Zugabe einer Borverbindung und von Stickstoff realisieren.

**Beispiel 2**

Die Hemmung der Methanisierungsreaktion durch Zugabe von $N_2$ wurde über einen Zeitraum von einem Jahr an zwei Vorrichtungen A und B zur Hydrierung von STC getestet. Die beiden Vorrichtungen waren jeweils entsprechend Fig. 1 aufgebaut. Beide Vorrichtungen wurden unter gleichen Bedingungen betrieben. Der einzige Unterschied bestand in der $N_2$-Konzentration im Eduktgas.

Beide Vorrichtungen umfassten jeweils zehn Reaktoren mit Widerstandsheizelementen, Wärmetauschern und weiteren Konstruktionsteilen aus Graphit, die alle in Kontakt mit Edukt- und/oder Produktgas standen.

Dem System wurde $N_2$ über einen stickstoffhaltigen Wasserstoffstrom zugegeben. Der stickstoffhaltige Wasserstoffstrom wurde zur Einstellung der $N_2$-Konzentration im Eduktgas bei der Trenneinheit 4 dem Kreisprozess 10 zugeleitet (vgl. Fig. 1).

Die wesentlichen Betriebsparameter der Vorrichtung A und B waren:

- Molverhältnis STC:$H_2$ = 1:1,9
- Reaktionstemperatur = 975°C
- Druck = 12 bar

Stickstoffkonzentration bezogen auf $H_2$:

- Vorrichtung A: 0,2 mol-%
- Vorrichtung B: 1,5 mol-%

Es wurde festgestellt, dass im Jahresverlauf bei Vorrichtung B eine deutlich geringere Schädigung der Elemente mit Graphitoberfläche auftrat. Infolgedessen konnte Vorrichtung B deutlich länger ohne Austausch der Elemente mit Graphitoberfläche betrieben werden. Die Jahresproduktion an TCS konnte gesteigert werden. Die Instandhaltungskosten konnten maßgeblich gesenkt werden.

Die Anwesenheit von $N_2$ hatte keine negativen Auswirkungen, beispielsweise auf die Ausbeute oder den spezifischen Energiebedarf der Vorrichtungen.

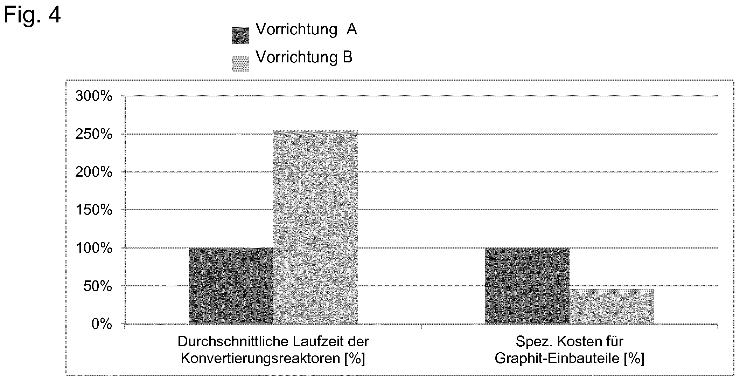

Eine Gegenüberstellung beider Vorrichtungen A und B hinsichtlich Laufzeit und Instandhaltung ist in Fig. 4 zu sehen.

**Beispiel 3**

Die Hemmung der Methanisierungsreaktion durch Zugabe von Diboran und $N_2$ wurde über einen Zeitraum von etwa einem Jahr an einer Vorrichtungen gemäß Fig. 1 getestet.

Folgende Betriebsparameter wurden gewählt:

- Molverhältnis STC:$H_2$ = 1:1,9
- Reaktionstemperatur = 975°C
- Druck = 12 bar

Diboran wurde mit einer konstanten Konzentration von 4 ppmv bezogen auf den Gesamtvolumenstrom dem Eduktgas zugesetzt. $N_2$ wurde mit einer Konzentration von 1,5 mol-% bezogen auf $H_2$ zugesetzt. Diboran und $N_2$ wurden von Betriebsbeginn an gemeinsam zugeführt. Die Laufzeit des Reaktors nach der kombinierten Zuführung betrug 350 Tage.

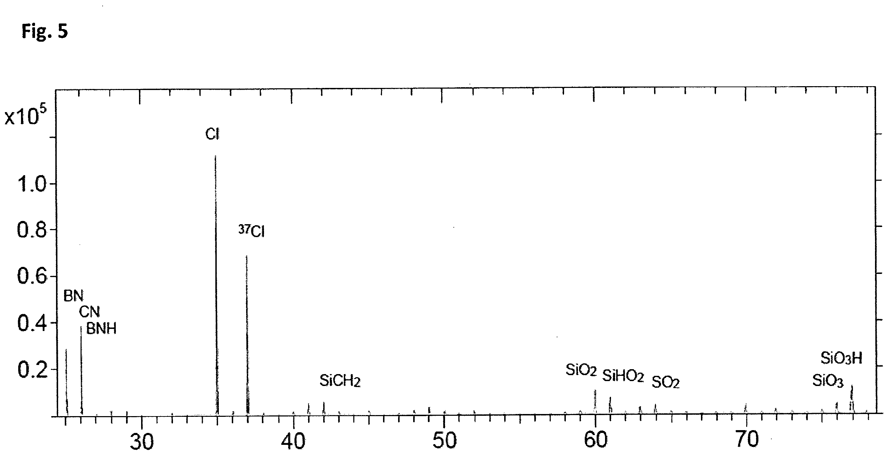

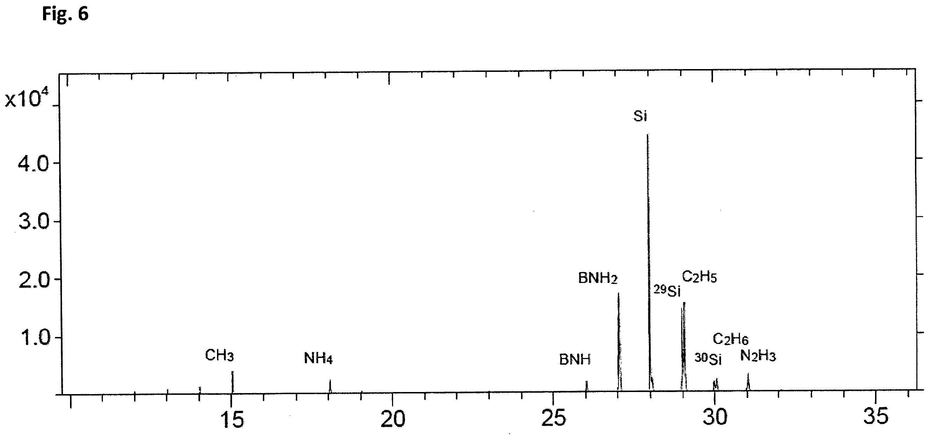

Nach dem Herunterfahren der Vorrichtung wurden die Widerstandsheizelemente entnommen und für eine Analyse mittels ToF-SIMS präpariert (Schliffpräparation der Oberfläche). Es wurden zwei Massenspektren aufgenommen, die in den Fig. 5 und 6 dargestellt sind.

Die Ausbeute bzw. Intensität (y-Achse der Spektren) der abgetragenen bzw. herausgelösten Ionen ist signifikant abhängig von der Gesamtmatrix, welche grundsätzlich für eine quantitative Aussage im Vorfeld kalibriert werden muss. Diese Kalibrierung ist bei der Messung nicht durchgeführt worden. Daher kann nur eine qualitative Aussage getroffen werden.

Die abgetragenen Ionen können sowohl eine positive als auch eine negative Ladung aufweisen und werden ladungsabhängig in separaten Spektren dargestellt. Für eine Gesamtbetrachtung der Probenoberfläche muss sowohl das Spektrum der Kationen als auch das der Anionen herangezogen werden.

Die x-Achse der Spektren zeigt die Einheit m/z [Masse pro Anzahl der Elementarladung].

Fig. 5 zeigt einen Auszug aus dem Anionen-Spektrum mit einem x-Achsen-Bereich von 25 - 80 m/z.

Fig. 6 zeigt einen Auszug aus dem Kationen-Spektrum mit einem x-Achsen-Bereich von 10 - 35 m/z.

Sowohl im Anionen-Spektrum als auch im Kationen-Spektrum der ToF-SIMS-Analyse sind neben deutlichen Chlor-, Silicium- und Sauerstoffspezies auch geringe Spuren stickstoffhaltiger Spezies erkennbar. Als Beispiele können hier die (CN-)- und (BN-)-Fragmente bei 25 bzw. 26 m/z (vgl. Fig. 5) sowie die ($BNH_2$+)- und ($NH_4$+)-Fragmente bei 26 bzw. 18 m/z (vgl. Fig. 6) genannt werden.

Insgesamt lässt der Nachweis dieser Stickstoff- und Borspezies auf der Bauteiloberfläche den Schluss zu, dass sich der zugeführte Stickstoff und/oder die Borverbindung nicht inert verhält sondern durch Ausbildung oberflächenspezifischer Bindungen aktiv an der Hemmung der Methanisierungsreaktion beteiligt ist.

Bei einer Vorrichtung, die unter vergleichbaren Bedingungen, jedoch ohne eine kombinierte Zugabe von $N_2$ und Diboran, betrieben wurde, musste bereits nach 160 Tagen ein Austausch der Heizelemente durchgeführt werden.

**Patentansprüche**

1. Verfahren zur Hydrierung von Siliciumtetrachlorid in einem Reaktor, bei dem ein Wasserstoff und Siliciumtetrachlorid enthaltendes Eduktgas mittels mindestens einem Heizelement, das eine Graphitoberfläche umfasst, auf eine Temperatur zwischen 850°C und 1600°C erwärmt wird, wobei die Temperatur des Heizelements zwischen 850°C und 1600°C beträgt, **dadurch gekennzeichnet, dass** dem Eduktgas Stickstoff in einem Stoffmengenanteil von 0,1 bis 10 % bezogen auf Wasserstoff zugesetzt wird.

2. Verfahren nach Anspruch 1, **dadurch gekennzeichnet, dass** Stickstoff in einem Stoffmengenanteil von 0,5 bis 5 %, bevorzugt 1 bis 4 %, besonders bevorzugt 1,5 bis 3 %, bezogen auf Wasserstoff zugesetzt wird.

3. Verfahren nach einem der vorhergehenden Ansprüche, **dadurch gekennzeichnet, dass** die Temperatur des Heizelements 850 bis 1500°C, bevorzugt 900 bis 1400°C, besonders bevorzugt 900 bis 1300°C, beträgt.

4. Verfahren nach einem der vorhergehenden Ansprüche, **dadurch gekennzeichnet, dass** die Temperatur des Eduktgases 850 bis 1500°C, bevorzugt 900 bis 1400°C, besonders bevorzugt 900 bis 1300°C, beträgt.

5. Verfahren nach einem der vorhergehenden Ansprüche, **dadurch gekennzeichnet, dass** das Verfahren bei einem Druck zwischen 2 und 18 bar, bevorzugt 3 bis 17 bar, besonders bevorzugt 4 bis 16 bar, insbesondere 5 bis 15 bar, durchgeführt wird.

6. Verfahren nach einem der vorhergehenden Ansprüche, **dadurch gekennzeichnet, dass** Siliciumtetrachlorid und Wasserstoff in einem Stoffmengenverhältnis von 1 zu 1,3 bis 1 zu 2,5, bevorzugt 1 zu 1,5 bis 1 zu 2,3, besonders bevorzugt 1 zu 1,6 bis 1 zu 2,2, vorliegen.

7. Verfahren nach einem der vorhergehenden Ansprüche, **dadurch gekennzeichnet, dass** die Graphitoberfläche mit Siliciumcarbid beschichtet ist.

8. Verfahren nach einem der vorhergehenden Ansprüche, **dadurch gekennzeichnet, dass** im Eduktgas ferner eine Borverbindung enthalten ist.

9. Verfahren nach Anspruch 8, **dadurch gekennzeichnet, dass** die Borverbindung ausgewählt ist aus der Gruppe mit Diboran, höhere Borane, Borhalogenverbindungen, Borsilylverbindungen und Mischungen daraus.

10. Verfahren nach Anspruch 8 oder 9, **dadurch gekennzeichnet, dass** die Borverbindung in einem Stoffmengenanteil von 0,1 ppmv bis 100 ppmv bezogen auf die Eduktgasmenge zugesetzt wird.

11. Verfahren nach einem der vorhergehenden Ansprüche, **dadurch gekennzeichnet, dass** dem zumindest einen Heizelement zumindest ein Wärmetauscher, der vorzugsweise eine Graphitoberfläche umfasst, vorgeschaltet und/oder nachgeschaltet ist.

12. Verfahren nach einem der vorhergehenden Ansprüche, **dadurch gekennzeichnet, dass** Stickstoff gemeinsam mit Wasserstoff dem Reaktor zugeführt wird.

13. Verfahren nach einem der vorhergehenden Ansprüche, **dadurch gekennzeichnet, dass** Stickstoff gemeinsam mit Siliciumtetrachlorid dem Reaktor zugeführt wird.

14. Verfahren nach einem der vorhergehenden Ansprüche, **dadurch gekennzeichnet, dass** der verwendete Wasserstoff bereits den Stickstoff enthält.

## Claims

1. Process for hydrogenating silicon tetrachloride in a reactor, in which a feed gas containing hydrogen and silicon tetrachloride is heated to a temperature in the range from 850°C to 1600°C by means of at least one heating element which comprises a graphite surface, with the temperature of the heating element being in the range from 850°C to 1600°C, **characterized in that** nitrogen is added in a molar proportion of from 0.1 to 10% based on hydrogen to the feed gas.

2. Process according to Claim 1, **characterized in that** nitrogen is added in a molar proportion of from 0.5 to 5%, preferably from 1 to 4%, particularly preferably from 1.5 to 3%, based on hydrogen.

3. Process according to either of the preceding claims, **characterized in that** the temperature of the heating element is from 850 to 1500°C, preferably from 900 to 1400°C, particularly preferably from 900 to 1300°C.

4. Process according to any of the preceding claims, **characterized in that** the temperature of the feed gas is from 850 to 1500°C, preferably from 900 to 1400°C, particularly preferably from 900 to 1300°C.

5. Process according to any of the preceding claims, **characterized in that** the process is carried out at a pressure in the range from 2 to 18 bar, preferably from 3 to 17 bar, particularly preferably from 4 to 16 bar, in particular from 5 to 15 bar.

6. Process according to any of the preceding claims, **characterized in that** silicon tetrachloride and hydrogen are present in a molar ratio of from 1 : 1.3 to 1 : 2.5, preferably from 1 : 1.5 to 1 : 2.3, particularly preferably from 1 : 1.6 to 1 : 2.2.

7. Process according to any of the preceding claims, **characterized in that** the graphite surface is coated with silicon carbide.

8. Process according to any of the preceding claims, **characterized in that** a boron compound is additionally present in the feed gas.

9. Process according to Claim 8, **characterized in that** the boron compound is selected from the group consisting of diborane, higher boranes, boron-halogen compounds, borosilyl compounds and mixtures thereof.

10. Process according to Claim 8 or 9, **characterized in that** the boron compound is added in a molar proportion of from 0.1 ppmv to 100 ppmv based on the amount of feed gas.

11. Process according to any of the preceding claims, **characterized in that** at least one heat exchanger which preferably comprises a graphite surface is installed upstream and/or downstream of the at least one heating element.

12. Process according to any of the preceding claims, **characterized in that** nitrogen is introduced together with hydrogen into the reactor.

13. Process according to any of the preceding claims, **characterized in that** nitrogen is introduced together with silicon tetrachloride into the reactor.

14. Process according to any of the preceding claims, **characterized in that** the hydrogen used already contains the nitrogen.

**Revendications**

1. Procédé pour l'hydrogénation de tétrachlorure de silicium dans un réacteur, dans lequel un gaz éduit contenant de l'hydrogène et du tétrachlorure de silicium est chauffé à une température entre 850°C et 1600°C à l'aide d'au moins un élément de chauffage, qui comprend une surface de graphite, la température de l'élément de chauffage se situant entre 850°C et 1600°C, **caractérisé en ce que** de l'azote est ajouté au gaz éduit en une proportion de 0,1 à 10% par rapport à l'hydrogène.

2. Procédé selon la revendication 1, **caractérisé en ce que** de l'azote est ajouté en une proportion de 0,5 à 5%, préférablement de 1 à 4%, particulièrement préférablement de 1,5 à 3%. par rapport à l'hydrogène.

3. Procédé selon l'une quelconque des revendications précédentes, **caractérisé en ce que** la température de l'élément de chauffage est de 850 à 1500°C, préférablement de 900 à 1400°C, particulièrement préférablement de 900 à 1300°C.

4. Procédé selon l'une quelconque des revendications précédentes, **caractérisé en ce que** la température du gaz éduit est de 850 à 1500°C, préférablement de 900 à 1400°C, particulièrement préférablement de 900 à 1300°C.

5. Procédé selon l'une quelconque des revendications précédentes, **caractérisé en ce que** le procédé est réalisé à une pression entre 2 et 18 bars, préférablement de 3 à 17 bars, particulièrement préférablement de 4 à 16 bars, en particulier de 5 à 15 bars.

6. Procédé selon l'une quelconque des revendications précédentes, **caractérisé en ce que** le tétrachlorure de silicium et l'hydrogène sont présents en un rapport molaire de 1 à 1,3 jusqu'à 1 à 2,5, préférablement de 1 à 1,5 jusqu'à 1 à 2,3, particulièrement préférablement de 1 à 1,6 jusqu'à 1 à 2,2.

7. Procédé selon l'une quelconque des revendications précédentes, **caractérisé en ce que** la surface de graphite est revêtue de carbure de silicium.

8. Procédé selon l'une quelconque des revendications précédentes, **caractérisé en ce qu'**un composé de bore est en outre présent dans le gaz éduit.

9. Procédé selon la revendication 8, **caractérisé en ce que** le composé de bore est choisi dans le groupe du diborane, des boranes supérieurs, des composés halogénoborés, des composés silylborés et des mélanges de ceux-ci.

10. Procédé selon la revendication 8 ou 9, **caractérisé en ce que** le composé de bore est ajouté en une proportion de 0,1 ppmv à 100 ppmv par rapport à la quantité de gaz éduit.

11. Procédé selon l'une quelconque des revendications précédentes, **caractérisé en ce qu'**au moins un échangeur de chaleur, qui comprend de préférence une surface de graphite, est monté en amont et/ou monté en aval de l'au moins un élément de chauffage.

12. Procédé selon l'une quelconque des revendications précédentes, **caractérisé en ce que** l'azote est introduit dans le réacteur conjointement avec l'hydrogène.

13. Procédé selon l'une quelconque des revendications précédentes, **caractérisé en ce que** l'azote est introduit dans le réacteur conjointement avec le tétrachlorure de silicium.

14. Procédé selon l'une quelconque des revendications précédentes, **caractérisé en ce que** l'hydrogène utilisé contient déjà l'azote.

Fig. 1

STC

N₂, HCl, H₂

TCS,
STC

H₂
N₂

HCl

Fig. 2

Fig. 3

Fig. 4

EP 3 487 614 B1

**Fig. 5**

Fig. 6

EP 3 487 614 B1

**IN DER BESCHREIBUNG AUFGEFÜHRTE DOKUMENTE**

**In der Beschreibung aufgeführte Patentdokumente**

- DE 19502550 B4
- EP 2000434 A2
- EP 1775263 A1
- WO 2015140027 A1
- DE 102012218741 A1
- WO 2013116146 A1
- DE 102010039267 A1
- US 4536642 A
- DE 3139705 A1
- DE 102011077967 A1